# EUROPÄISCHE PATENTSCHRIFT

(11) **EP 3 135 876 B1**
(45) Veröffentlichungstag und Bekanntmachung des Hinweises auf die Patenterteilung: **14.03.2018**
(21) Anmeldenummer: 16176827.0
(22) Anmeldetag: 29.06.2016
(51) Int. Cl.: F01N 3/20

(54) **VORRICHTUNG ZUR ABGASNACHBEHANDLUNG**
DEVICE FOR AFTERTREATMENT OF EXHAUST GAS
DISPOSITIF DE POST-TRAITEMENT DE GAZ D'ECHAPPEMENT

(30) Priorität: 25.08.2015 DE 102015114081
(43) Veröffentlichungstag der Anmeldung: 01.03.2017
(73) Patentinhaber: CLAAS Tractor S.A.S., 78141 Vélizy-Villacoublay Cedex (FR)
(72) Erfinder: Renaud, Jeremy, 27310 Bourg Achard (FR); Zunino, Christophe, 75009 Paris (FR); Plumet, Julien, 92210 Saint Cloud/France (FR); Benallal, Mohammed, 92330 Sceaux (FR)
(74) Vertreter: Budach, Steffen

(56) Entgegenhaltungen:
- EP-A1- 2 884 070
- DE-A1-102012 015 768
- US-A1- 2014 174 696
- US-A1- 2014 290 222
- US-A1- 2014 322 088

## Beschreibung

Die Erfindung betrifft eine Vorrichtung zur Abgasnachbehandlung für ein Fahrzeug, insbesondere eine landwirtschaftliche Arbeitsmaschine, gemäß dem Oberbegriff des Anspruchs 1.

Landwirtschaftliche Arbeitsmaschinen wie Traktoren oder selbstfahrende Erntemaschinen sind üblicherweise mit einem Verbrennungsmotor ausgestattet, der zur Bereitstellung von Leistung für den Fahrantrieb sowie für weitere unterschiedliche Funktionen dient. Als Verbrennungsmotor wird dabei üblicherweise ein Dieselmotor eingesetzt, dessen Kraftstoff in einem oder mehreren Kraftstofftanks auf der Arbeitsmaschine mitgeführt wird. Die Abgase des Verbrennungsmotors enthalten unterschiedliche Schadstoffe, so dass bei modernen Arbeitsmaschinen die Abgase durch eine Vorrichtung zur Abgasnachbehandlung gereinigt werden. So wird beispielsweise die Konzentration von in den Abgasen enthaltenen Stickoxiden durch eine selektive katalytische Reduktion (SCR) reduziert. Dazu wird dem Abgas eine unmittelbar reduzierend wirkende Substanz, beispielsweise Ammoniak oder ein Vorprodukt davon, zugeführt, welches erst im Abgas die benötigten reduzierenden Substanzen freisetzt. Als Vorprodukt kann beispielsweise eine Harnstoff-Wasser-Lösung verwendet werden. Ammoniak wird bei der selektiven katalytischen Reduktion mit Stickstoffmonoxid und Stickstoffdioxid zu molekularem Stickstoff und Wasser umgewandelt. Die selektive katalytische Reduktion findet dabei in einem sogenannten SCR-Katalysator statt.

Das Einbringen des Reduktionsmittels, beispielsweise der Harnstoff-Wasser-Lösung, in die Abgase erfolgt über eine Dosiervorrichtung mit einer Einspritzdüse, durch welche das Reduktionsmittel unmittelbar in den Abgasstrom eingespritzt werden kann. Die Einspritzdüse ist dabei zur Dosierung des eingespritzten Reduktionsmittels üblicherweise elektrisch betätigbar. Ein Einspritzen des Reduktionsmittels in den Abgasstrom erfolgt dabei stromaufwärts des SCR-Katalysators.

Aus der DE 10 2007 013 524 A1 ist beispielsweise ein derartiges Dosiermodul mit einer Einspritzdüse bekannt. Um die Funktionsfähigkeit des Dosiermoduls und der Einspritzdüse zu gewährleisten, ist bekannt, diese mit einem Kühlkörper zu umgeben, der von einem Kühlmittelteilstrom der Brennkraftmaschine durchflossen wird. Damit ist gewährleistet, dass das Dosiermodul und die Einspritzdüse keinen unzulässig hohen Temperaturen während des Betriebes des Verbrennungsmotors ausgesetzt sind.

Aus der DE 10 2012 015768 A1 ist einen Latentwärmespeicher bekannt, welcher mittels eines Wärmeleitrohres mit einem Dosiermodul verbunden ist, wodurch Wärmeenergie von dem Dosiermodul zu dessen Kühlung abgeleitet werden kann.

In der EP 2 884 070 A1 ist eine Kühlung des Dosiermoduls mittels Kühlwasser offenbart, wobei das Kühlwasser über Rohrleitungen von einem Kühlsystem zu dem Dosiermodul hin und von diesem weg geleitet wird. Die Leitungen sind dabei schlangenlinienförmig ausgebildet.

Kühlwasserbasierte Systeme zur Kühlung eines Dosiermoduls sind aus US 2014 017 4696 A1 und US 2014 032 2088 A1 bekannt, wobei in dem Kühlwasserkreislauf ein Zusatztank in dem Zulauf oder Rücklauf des Kühlwassers vorgesehen ist, welcher als Kühlmittelreservoir dient.

Bei einer unerwarteten Abschaltung des Verbrennungsmotors, beispielsweise aus Sicherheitsgründen, kann es auch zu einer Abschaltung des Kühlsystems kommen, wodurch auch die Kühlung des Dosiermoduls unterbrochen werden kann. Besonders bei einer Abschaltung des Verbrennungsmotors unter hoher Last wird aufgrund der herrschenden hohen Temperaturen eine große Wärmemenge von dem Verbrennungsmotor freigesetzt, welche auf das Dosiermodul und die Einspritzdüse wirkt. Zudem wird von dem Abgasstrang, in welchem das Dosiermodul und die Einspritzdüse unmittelbar angeordnet sind, eine hohe Wärmemenge an das Dosiermodul abgegeben, wodurch es zu Beeinträchtigungen des in der Einspritzdüse verbleibenden Reduktionsmittels kommen kann, wodurch eine weitere Funktion des Dosiermoduls beeinträchtigt werden kann. Zudem kann es aufgrund der hohen Temperaturen zu einer Beschädigung der elektrischen Verstellung des Dosiermoduls und insbesondere der Einspritzdüse kommen.

Es ist daher eine Aufgabe der vorliegenden Erfindung eine Vorrichtung zur Abgasnachbehandlung mit einem Dosiermodul bereitzustellen, welche insbesondere nach Unterbrechung einer Kühlung des Dosiermoduls ein Überhitzen des Dosiermoduls vermeidet und so eine Beschädigung des Dosiermoduls vermeidet und eine sichere Funktion gewährleisten kann.

Die Aufgabe wird gelöst durch eine Vorrichtung zur Abgasnachbehandlung gemäß den Merkmalen des Anspruches 1. Vorteilhafte Ausgestaltungen der Erfindung sind in den Unteransprüchen angegeben.

Eine Vorrichtung zur Abgasnachbehandlung für ein Fahrzeug, insbesondere eine landwirtschaftliche Arbeitsmaschine, mit einem Verbrennungsmotor, mit einem Dosiermodul, mit einer Einspritzdüse zum Einbringen eines Hilfsstoffes, insbesondere eines Reduktionsmittels wie Harnstoff, in einem Abgasstrom des Verbrennungsmotors, wobei erfindungsgemäß ein Wärmeenergiespeicher zur Speicherung von Wärmeene
gie des Dosiermoduls vorgesehen ist, welcher thermisch leitend mit dem Dosiermodul, und insbesondere der Einspritzdüse, verbunden ist.

Unter einem Wärmeenergiespeicher ist dabei ein Bauteil zu verstehen, welches thermisch leitend mit dem Dosiermodul, und insbesondere der Einspritzdüse des Dosiermoduls, verbunden ist, um Wärmeenergie von dem Dosiermodul und der Einspritzdüse aufzunehmen und zu speichern. Der Wärmeenergiespeicher kann dabei ein Bauteilsein, welches zusätzlich zu den die Funktion des Dosiermoduls gewährleistenden Bauteilen vorgesehen ist. Die Wärmeenergie kann dabei von dem Dosiermodul zu dem Wärmeenergiespeicher hin geleitet, und dort im Gegensatz zu einem Kühlkörper, gespeichert und nicht durch eine beispielsweise vergrößerte Oberfläche, an die Umgebung abgegeben werden. Der Wärmeenergiespeicher ist dabei derart ausgestaltet und ausgebildet, so dass eine hinreichend große Wärmeenergiemenge von dem Dosiermodul aufgenommen und gespeichert werden kann, um insbesondere bei einem schlagartigen Abschalten und Unterbrechen der Kühlung des Dosiermoduls ein Überhitzen des Dosiermoduls vermieden werden kann. Durch diesen Effekt, dass Wärmeenergie von dem Dosiermodul zu dem Wärmeenergiespeicher hingeleitet und dort gespeichert werden kann, kann insbesondere bei einem Abschalten des Verbrennungsmotors und einem Unterbrechen der Kühlung des Dosiermoduls ein Überhitzen des Dosiermoduls und insbesondere der Einspritzdüse vermieden werden. Dies hat den Vorteil, dass eine Hitzebelastung des Dosiermoduls und der Einspritzdüse verringert werden kann, und dadurch eine Beschädigung aufgrund zu hoher Temperaturen vermieden werden kann. Dies gewährleistet einen sicheren dauerhaften Betrieb des Dosiermoduls

In einer bevorzugten Ausgestaltung der Erfindung ist der Wärmeenergiespeicher beabstandet zu oder unmittelbar an dem Dosiermodul und/oder der Einspritzdüse angeordnet. Hierbei kann ein Transport der Wärmeenergie von dem Dosiermodul und/oder der Einspritzdüse zu dem Wärmeenergiespeicher durch direkten Kontakt und/oder über eine Wärmeleitung erfolgen. Eine eine unmittelbare Anordnung des Wärmeenergiespeichers an dem Dosiermodul und/oder der Einspritzdüse hat den Vorteil, dass eine schnelle Ableitung der Wärmeenergie von dem Dosiermodul und/oder der Einspritzdüse zu dem Wärmeenergiespeicher ermöglicht wird, wodurch ein starker Temperaturanstieg an dem Dosiermodul und/oder der Einspritzdüse vermieden werden kann.

In einer besonders bevorzugten Ausgestaltung der Erfindung weist der Wärmeenergiespeicher mindestens ein Speichermedium in Form einer Flüssigkeit oder eines Feststoffes zur Aufnahme der Wärmeenergie des Dosiermoduls auf. Das Speichermedium ist dabei das Material des Wärmeenergiespeichers, welcher zum Speichern der überwiegenden Menge der Wärmeenergie in dem Wärmeenergiespeicher dient. Ein Wärmeenergiespeicher mit einem Speichermedium in Form eines Feststoffes kann beispielsweise als ein einstückiger Körper ausgebildet sein. Ein Wärmeenergiespeicher mit einem Speichermedium in Form einer Flüssigkeit hingegen kann beispielsweise eines Behältnisses zur Aufnahme des flüssigen Speichermediums ausgebildet sein. Ein festes Speichermedium kann beispielsweise ein Metall, wie Kupfer, Eisen, oder Magnesium, sein. Ein Wärmeenergiespeicher mit einem festen Speichermedium kann beispielsweise in Form eines metallenen Bauteils innerhalb des Motorraumes, wie einer Tragstruktur, ausgebildet sein. Ein flüssiges Speichermedium kann beispielsweise Wasser sein, welches eine sehr hohe spezifische Wärmekapazität aufweist. Ein Wärmeenergiespeicher mit einem flüssigen Speichermedium kann dabei im Wesentlichen oberhalb an dem Dosiermodul und/oder der Einspritzdüse angeordnet sein. Dies hat den Vorteil, dass bei einem flüssigen Speichermedium neben der Wärmeleitung auch eine natürliche, thermische Konvektion, beispielsweise innerhalb des flüssigen Speichermediums, ermöglicht werden kann. Der Wärmeenergiespeicher kann dadurch zumindest teilweise zur schnellen Weiterleitung von Wärmeenergie zu einem Speichermedium mit hoher spezifischer Wärmekapizität und hohem Speichervermögen ausgelegt sein. Dadurch kann eine Aufnahme und Speicherung von Wärmeenergie des Dosiermoduls beschleunigt werden.

In einer weiteren Ausgestaltung der Erfindung sind mindestens ein erstes und ein zweites Speichermedium vorgesehen, wobei die Speichermedien fest und/oder flüssig sein können und gleiche oder unterschiedliche spezifische Wärmekapazitäten aufweisen können. Dadurch kann der Wärmeenergiespeicher mehrere Speichermedien, beispielsweise mit unterschiedlichen spezifischen Wärmekapazitäten aufweisen, wodurch beispielsweise durch ein festes Speichermedium mit einer niedrigen spezifischen Wärmekapazität, wie Kupfer, eine Ableitung der Wärmeenergie von dem Dosiermodul hin zu einem beispielsweise flüssigen Speichermedium mit einer hohen spezifischen Wärmekapazität, beschleunigt werden kann. Dadurch kann eine schnelle Ableitung der Wärmeenergie von dem Dosiermodul erfolgen und eine hohe Wärmemenge in dem Wärmeenergiespeicher aufgenommen werden

In einer besonders bevorzugten Ausgestaltung der Erfindung ist der Wärmeenergiespeicher zur Aufnahme eines flüssigen Speichermediums in Form eines Tanks und/oder in Form einer Rohrleitung ausgebildet. Unter einer Rohrleitung ist dabei im Sinne der Erfindung auch ein Schlauch zu verstehen, da hierbei die Aufnahme des flüssigen Speichermediums im Vordergrund steht. Ein Wärmeenergiespeicher für ein flüssiges Speichermedium in Form eines Tanks kann dabei unmittelbar oder beabstandet zu dem Dosiermodul und/oder der Einspritzdüse angeordnet sein. Ein beabstandet zu dem Dosiermodul und/oder der Einspritzdüse angeordneter Wärmeenergiespeicher mit einem flüssigen Speichermedium kann dabei fluiddurchlässig über Rohrleitungen mit dem Dosiermodul verbunden sein. Die Rohrleitungen können dabei einen Durchmesser aufweisen, welcher eine natürliche thermische Konvektion, also eine durch die aufgenommene Wärmeenergie bedingte Stoffbewegung des flüssigen Speichermediums innerhalb des Tanks und/oder der Rohrleitungen ermöglichen

In einer besonders bevorzugten Ausgestaltung der Erfindung sind der Wärmespeicher und/oder das Dosiermodul, und insbesondere die Einspritzdüse, wassergekühlt. Eine Wasserkühlung des Dosiermoduls des Wärmeenergiespeichers und/oder der Einspritzdüse kann dabei beispielsweise mit einem aktiven Kühlkreislauf, welcher durch eine Pumpe betrieben wird, erfolgen. Die Kühlung des Wärmeenergiespeichers kann bei einem festen Speichermedium durch unmittelbaren Kontakt mit dem Kühlwasser erfolgen. Bei einem Wärmeenergiespeicher mit einem flüssigen Speichermedium kann eine Kühlung des Wärmeenergiespeichers beispielsweise durch einen Austausch des flüssigen Speichermediums erfolgen. Dies hat den Vorteil, dass nicht nur eine zügige Aufnahme der Wärmeenergie von dem Dosiermodul ermöglicht wird, sondern auch eine sehr große Speicherkapazität an Wärmeenergie durch den Austausch des flüssigen Speichermediums gewährleistet werden kann.

In einer weiteren besonders bevorzugten Ausgestaltung der Erfindung ist das flüssige Speichermedium Kühlwasser des Verbrennungsmotors. Ein Wärmeenergiespeicher, dessen flüssiges Speichermedium Kühlwasser des Verbrennungsmotors ist, kann derart an den Kühlkreislauf des Verbrennungsmotors angeschlossen sein, dass eine Kühlung des Wärmeenergiespeichers und/oder des Dosiermoduls durch zumindest einen Teilstrom des Kühlkreislaufs des Verbrennungsmotors erfolgen kann. Dies ermöglicht eine aktive Kühlung des Wärmeenergiespeichers, wenn der Kühlkreislauf des Verbrennungsmotors läuft, wodurch die Speicherung von Wärmeenergie in dem Wärmeenergiespeicher während des normalen Betriebes des Fahrzeuges, insbesondere der landwirtschaftlichen Arbeitsmaschine, vermieden werden kann. Das Kühlwasser innerhalb des Wärmeenergiespeichers kann dabei als quasistationär angesehen werden. Dies hat den Vorteil, dass bei einem Ausfall der Kühlung des Dosiermoduls und/oder des Wärmeenergiespeichers, der Wärmeenergiespeicher eine höhere Wärmemenge aufnehmen kann als ein Wärmeenergiespeicher ohne umgewälztes Kühlmittel. Ein Wärmeenergiespeicher, welcher zwei flüssige Speichermedien aufweist, kann derart an dem Kühlwasserkreislauf angeschlossen sein, dass ein erstes flüssiges Speichermedium stromaufwärts des Dosiermoduls in dem Kühlmittelkreislauf angeordnet ist, und ein zweites flüssiges Speichermedium stromabwärts von dem Dosiermodul angeordnet ist. Dabei kann bei einem Umwälzen des Kühlmittels des Verbrennungsmotors zunächst das Kühlwasser das erste flüssige Speichermedium austauschen, das Dosiermodul durchströmen, und das zweite flüssige Speichermedium austauschen. Bei einem Stillstand des Kühlmittelkreislaufs, also bei einer fehlenden Umwälzung, sind sowohl das erste Speichermedium als auch das zweite Speichermedium über das Kühlwasser wärmeleitend mit dem Dosiermodul und/oder der Einspritzdüse zur Aufnahme und Speicherung von Wärmeenergie verbunden.

In einer weiteren Ausgestaltung der Erfindung weist der Wärmeenergiespeicher Kühlstrukturen zur Abgabe aufgenommener Wärmeenergie auf. Diese Kühlstrukturen können beispielsweise in Form einer außenseitig an dem Wärmeenergiespeicher angebrachten Profilierung ausgebildet sein, und dienen der Abfuhr und Ableitung von Wärmeenergie aus dem Wärmeenergiespeicher und wirken dabei als Kühlkörper. Dies hat den Vorteil, dass der Wärmeenergiespeicher nach Aufnahme der Wärmeenergie von dem Dosiermodul diese schneller an die Umgebung abgeben kann.

In einer weiteren bevorzugten Ausgestaltung der Erfindung weist der Wärmeenergiespeicher mindestens eine Wärmeschutzvorrichtung auf, welche eine Aufnahme von anderer Wärmeenergie als der des Dosiermoduls verringert. Die Wärmeschutzvorrichtung reduziert die Aufnahme von Wärmeenergie von anderen Baugruppen des Fahrzeuges, wie des Verbrennungsmotors und/oder des Abgasstranges, welche beispielsweise in Form von Wärmestrahlung auf den Wärmeenergiespeicher übertragen werden können. Dadurch kann die Erwärmung des Wärmeenergiespeichers verringert werden, wodurch eine höhere Wärmeenergie von dem Dosiermodul und/oder der Einspritzdüse auf-genommen werden kann. Die Wärmeschutzvorrichtung kann beispielsweise in Form einer Isolierung, beispielsweise aus einem Material niedriger Wärmeleitfähigkeit, ausgebildet sein. Ebenso ist denkbar, dass die Wärmeschutzvorrichtung in Form eines Hitzeschildes gegen Strahlungswärme ausgebildet ist, wobei das Hitzeschild beabstandet zu dem Wärmeenergiespeicher angeordnet sein kann.

Die Erfindung betrifft weiterhin ein Fahrzeug, insbesondere eine landwirtschaftliche Arbeitsmaschine, mit mindestens einer Vorrichtung zur Abgasnachbehandlung, welche wie vorstehend aus- und weitergebildet ist.

Die Erfindung wird nachfolgend anhand von Ausführungs-beispielen näher erläutert. Daraus ergeben sich auch vorteilhafte Wirkungen und Effekte.
In den Figuren zeigt:
- Figur 1: einen Traktor in schematischer Ansicht von der Seite mit einer erfindungsgemäßen Vorrichtung zur Abgasnachbehandlung;
- Figur 2: eine Vorrichtung zur Abgasnachbehandlung mit einem Wärmeenergiespeicher;
- Figur 3: eine perspektivische, geschnittene Ansicht des tankförmigen Wärmeenergiespeichers aus Figur 2;
- Figur 4: eine geschnittene Darstellung des unmittelbar an dem Dosiermodul angeordneten Wärmeenergiespeichers aus Figur 2 und Figur 3;
- Figur 5: eine perspektivische Darstellung eines beabstandet zu dem Dosiermodul angeordneten Wärmeenergiespeichers;
- Figur 6: eine perspektivische, geschnittene Ansicht des Wärmeenergiespeichers in Figur 5; und
- Figur 7: eine geschnittene Seitenansicht des Wärmeenergiespeichers aus Figur 5 und Figur 6.

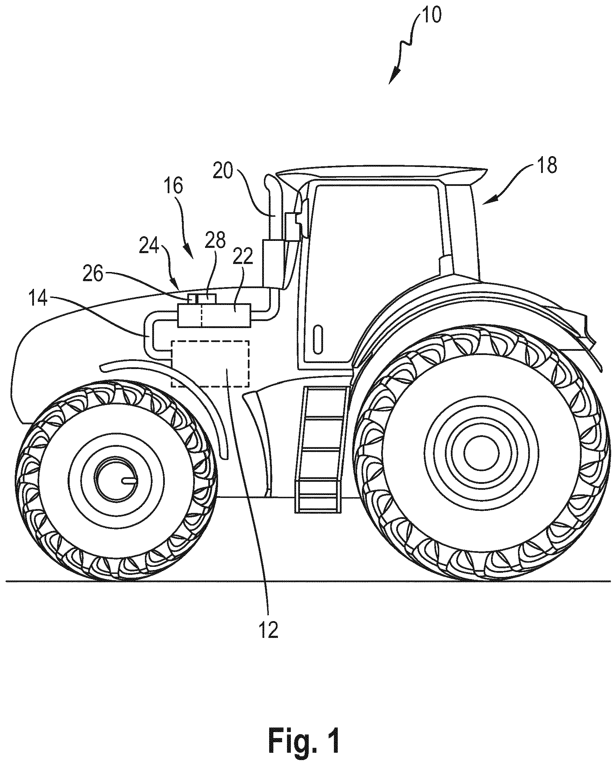

In Figur 1 ist ein Fahrzeug 10 in Form einer landwirtschaftlichen Arbeitsmaschine in Form eines Traktors in schematischer Ansicht von der Seite gezeigt. Der Traktor 10 weist einen Verbrennungsmotor 12 auf, der auf sich bekannte und daher nicht weiter zu erläuternde Weise zum Fahrantrieb des Traktors 10 dient. Daneben kann der Verbrennungsmotor 12 auf für sich bekannte Weise zum Antrieb von Arbeits- und Hilfsaggregaten, wie Arbeitshydraulik oder Pneumatik, des Traktors 10 dienen. Bei dem Betrieb des Verbrennungsmotors 12 entstehen Abgase, welche über ein Abgasrohr 14 durch eine Vorrichtung zur Abgasnachbehandlung 16 und einen im Wesentlichen senkrecht vor einer Fahrerkabine 18 angeordneten Auspuff 20 an die Umgebung abgegeben werden. Die Vorrichtung zur Abgasnachbehandlung 16 weist zur Reduzierung der Konzentration von in den Abgasen enthaltenen Stickoxiden durch eine selektive katalytische Reduktion (SCR) einen Katalysator 22 auf. Zur Reduzierung der Stickoxide in dem Abgas wird stromaufwärts von dem Katalysator 22 eine reduzierende wirkende Substanz, beispielsweise Ammoniak oder ein entsprechendes Vorprodukt, dem Abgasstrom zugeführt. Die Dosierung des Hilfsstoffes in den Abgasstrom erfolgt dabei über ein Dosiermodul 24, welches eine Einspritzdüse 26 zum Einspritzen des Hilfsstoffes in den Abgasstrom aufweist.

Die Einspritzdüse ist dabei zur Dosierung der eingespritzten Reduzierungsmittel bzw. Reduktionsmittelmenge elektrisch betätigbar, wobei die selektive katalytische Reduktion in dem Katalysator erfolgt. Das Dosiermodul 24 und die Einspritzdüse 26 sind der Wärmestrahlung des Verbrennungsmotors und besonders des Abgasstranges ausgesetzt, so dass das Dosiermodul 24 und die Einspritzdüse 26 zur Vermeidung einer Überhitzung während des Betriebes des Verbrennungsmotors 12 wassergekühlt sind, wobei eine Kühlung des Dosiermodules 24 und der Einspritzdüse 26 beispielsweise über einen Teilstrom des Kühlsystems (nicht dargestellt) des Verbrennungsmotors 12 erfolgen kann. Zur Vermeidung von Temperatur-spitzen und eine temperaturbedingte Beschädigung des Dosiermoduls 24 und/oder der Einspritzdüse 26 ist ein Wärmeenergiespeicher 28 benachbart und wärmeleitend an dem Dosiermodul 24 und der Einspritzdüse 26 angeordnet. So kann bei einem Abschalten des Verbrennungsmotors 12 und/oder einer Unterbrechung der Kühlung des Dosiermoduls 24 und/oder der Einspritzdüse 26 die von dem Verbrennungsmotor 12 und/oder dem Abgasstrang, insbesondere dem Katalysator 22 abgegebene Wärmeenergie zu einer Überhitzung des Dosiermoduls 24 und/oder der Einspritzdüse 26 führen, welche zu Funktionsstörungen oder sogar einem Ausfall des Dosiermoduls 24 und/oder der Einspritzdüse 26 führen können.

Durch den thermisch leitend mit dem Dosiermodul 24 und/oder der Einspritzdüse 26 verbundenen Wärmeenergiespeicher 28 kann Wärmeenergie von dem Dosiermodul 24 und/oder der Einspritzdüse 26 durch Wärmeleitung auf den Wärmeenergiespeicher 28 übertragen und von diesem aufgenommen werden, wobei der Wärmeenergiespeicher 28 im Gegensatz zu einem Kühlkörper die aufgenommene Wärmeenergie von dem Dosiermodul 24 speichert. Der Wärmeenergiespeicher 28, welcher innerhalb des Motorraumes des Traktors 10 angeordnet ist, hat gegenüber einem Kühlkörper den Vorteil, dass die Wärmeenergie aufgenommen und gespeichert werden kann, wohingegen ein Kühlkörper aufgrund seiner geometrischen Form und eines Materials von hoher Wärmeleitfähigkeit eher die Wärme des Motorraumes aufnehmen und zusätzlich an das Dosiermodul 24 und/oder die Einspritzdüse 26 übertragen würde.

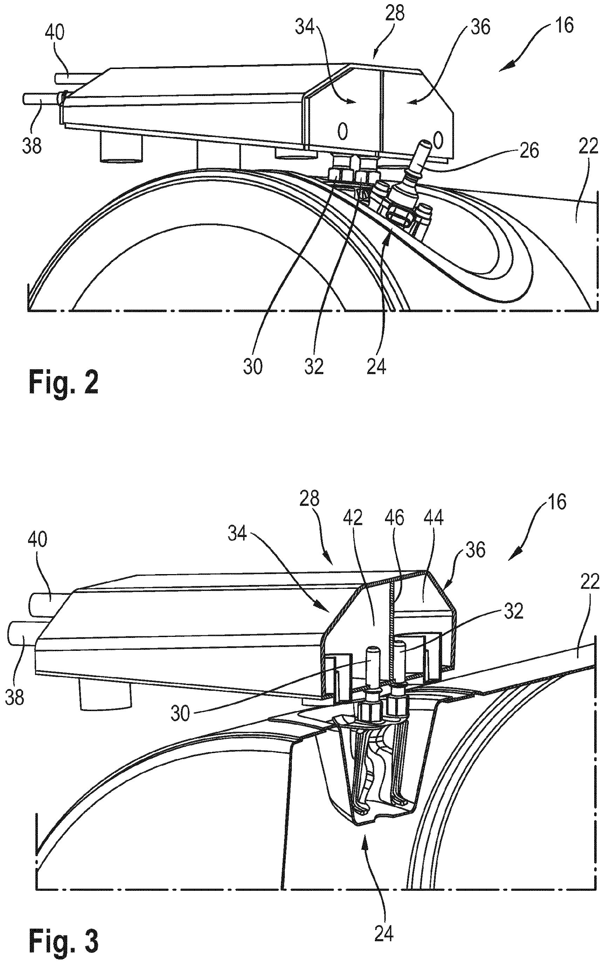

In Figur 2 ist ein unmittelbar an dem wassergekühlten Dosiermodul 24 angeordneter Wärmeenergiespeicher 28 dargestellt. Das Dosiermodul 24 und die Einspritzdüse 26 werden über einen Teilstrom des Kühlmittelkreislaufes des Verbrennungsmotors 12 während des Betriebs des Verbrennungsmotors 12 gekühlt. Hierbei wird das Kühlmittel über einen Zulaufstutzen 30 in das Dosiermodul 24 eingeleitet, und über einen Rücklaufstutzen 32 wieder dem Kühlkreislauf (nicht dargestellt) zugeführt. Der dargestellte Wärmeenergiespeicher 28 ist in den Kühlkreislauf des Verbrennungsmotors integriert, und ist unmittelbar an dem Dosiermodul 24, insbesondere dem Zulaufstutzen 30 und dem Rücklaufstutzen 32, angeordnet.

Der Wärmeenergiespeicher 28 ist in Form eines Tanks zur Aufnahme von flüssigen Speichermedien ausgebildet, und weist eine erste Kammer 34 und eine zweite Kammer 36 jeweils zur Aufnahme eines flüssigen Speichermediums auf. Die erste Kammer 34 ist dabei fluiddurchlässig mit dem Zulaufstutzen 30 unmittelbar verbunden, wobei über die bzw. einen Zulauf 38 des Kühlmittelkreislaufes des Traktors 10 Kühlmittels in die erste Kammer 34 und von dort in den Zulaufstutzen 30 gelangen kann. Der Rücklaufstutzen 32 des Dosiermoduls 24 ist ebenfalls fluiddurchlässig unmittelbar mit der zweiten Kammer 36 des Wärmeenergiespeichers 28 verbunden, so dass das Kühlmittel von dem Rücklaufstutzen 32 durch die zweite Kammer 36 in einen Rücklauf 40, welcher fluiddurchlässig mit der zweiten Kammer 36 verbunden ist, in den Kühlkreislauf des Fahr-zeuges bzw. des Traktors 10 zurückströmen kann. Durch die unmittelbare Anordnung des Wärmeenergiespeichers 28 an dem Dosiermodul 24, insbesondere dem Zulaufstutzen 30 und dem Rücklaufstutzen 32, kann bei einem Ausfall des bzw. der Kühlpumpe und des Kühlmittelstromes und/oder einer Abschaltung des Verbrennungsmotors 12 die Wärme des Dosiermoduls 24 unmittelbar durch den Wärmeenergie-speicher 28 über den Zulaufstutzen 30 und den Rücklauf-stutzen 32 aufgenommen werden.

Die Wärmeenergie des Dosiermoduls 24 kann dabei von den flüssigen Speichermedien in der ersten Kammer 34 und der zweiten Kammer 36 des Wärmeenergiespeichers 28 aufgenommen und gespeichert werden. Der Wärmeenergiespeicher 28 ist im Wesentlichen oberhalb des Dosiermoduls 24 und der Einspritzdüse 26 angeordnet. Dadurch kann bei der Aufnahme der Wärme-energie des Dosiermoduls 24 durch die flüssigen Speichermedien eine natürliche thermische Konvektion als Mechanismus des Wärmetransportes jeweils innerhalb der ersten Kammer 34 und der zweiten Kammer 36 bewirkt werden. Dabei kann das an dem jeweiligen Stutzen 30, 32 erwärmte und Wärmeenergie aufnehmende Speichermedium innerhalb der ersten und/oder zweiten Kammer 34, 36 auf-steigen, wodurch kühleres speicherflüssiges Speichermedium an den Stutzen 30, 32 nachströmen kann. Hierdurch kann die Aufnahme von Wärmeenergie von dem Dosiermodul 24 durch den Wärmeenergiespeicher 28 verbessert werden, wodurch ein Überhitzen des Dosiermoduls 24 und insbesondere der Einspritzdüse 26 vermieden werden kann.

In Figur 3 ist der oberhalb unmittelbar an dem Dosiermodul 24 angeordnete Wärmeenergiespeicher 28 in einer geschnittenen Ansicht dargestellt. Hierbei ist zu sehen, dass der Zulaufstutzen 30 in die erste Kammer 34 mit dem ersten flüssigen Speichermedium 42 hineinragt, wodurch eine gute Übertragung der Wärmeenergie von dem Dosiermodul 24 zu dem Wärmeenergiespeicher 28 sichergestellt werden kann. Auf gleiche Weise hakt der Rücklaufstutzen 32 des Dosiermoduls 24 in die zweite Kammer 36 des Wärmeenergiespeichers 28 hinein, in welcher das zweite Speichermedium 44, in Form von Wasser, insbesondere Kühlwasser, angeordnet ist. Die erste Kammer 34 und die zweite Kammer 36 des Wärmeenergiespeichers 28 sind dabei durch eine Trennwand 46 voneinander getrennt und weisen jeweils eine längliche Erstreckung auf.

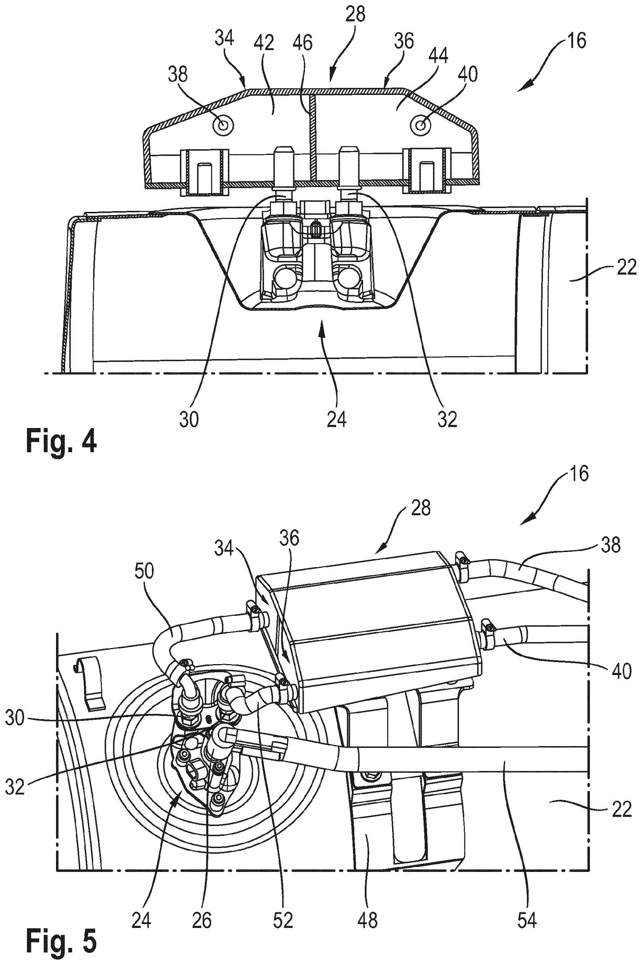

Der Wärmeenergiespeicher 28 kann dabei dem jeweils zur Verfügung stehenden Bauraum innerhalb des Motorraumes des Traktors 10 angepasst werden, wobei (Figur 4) oberhalb des Zulaufstutzens 30 und des Rücklaufstutzens 32 innerhalb der ersten Kammer 34 und der zweiten Kammer 36 hinreichend Raum zur Ermöglichung einer natürlichen thermischen Konvektion innerhalb der ersten und/oder zweiten Kammer 34, 36 bereitgestellt werden sollte. Bei einer funktionierenden Zirkulation des Kühlmittels des Kühlmittelkreislaufs (nicht dargestellt) des Traktors 10 wird das Kühlmittel durch den Zulauf 38 in die erste Kammer 34 des Wärmeenergiespeichers 28 geleitet, wobei das Kühlmittel innerhalb der ersten Kammer 34 das erste Speichermedium 42 darstellt. Das Kühlmittel wird aus der ersten Kammer 34 über den Zulaufstutzen 30 zur Kühlung des Dosiermoduls 24 durch dieses hindurch geleitet und verlässt das Dosiermodul 24 über den Rücklaufstutzen 32 und gelangt in die zweite Kammer 36 des Wärmeenergiespeichers 28. Innerhalb der zweiten Kammer 36 ist das Kühlmittel, insbesondere das Kühlwasser, das zweite Speichermedium 44, bis es über den Rücklauf 40 wieder in den Kühlmittelkreislauf des Traktors 10 eingespeist wird. Dadurch, dass das zweite Speichermedium 44 bei aktiver Kühlung des Dosiermoduls 24 stromabwärts von dem Dosiermodul 24 angeordnet ist, weist das zweite Speichermedium 44 eine höhere Temperatur als das erste Speichermedium 42 auf, wodurch die Menge der speicherbaren Wärmeenergie des zweiten Speichermediums gegenüber dem ersten Speichermedium 42 etwas reduziert ist. Bei einer Unterbrechung der aktiven Kühlung, das heißt einem Abschalten der Umwälzpumpe des Kühlmittelkreislaufs, beispielsweise bei einem Abschalten des Verbrennungsmotors 12, bildet das in den Kammern 34, 36 befindliche Kühlwasser das erste Speichermedium 42 und das zweite Speichermedium 44.

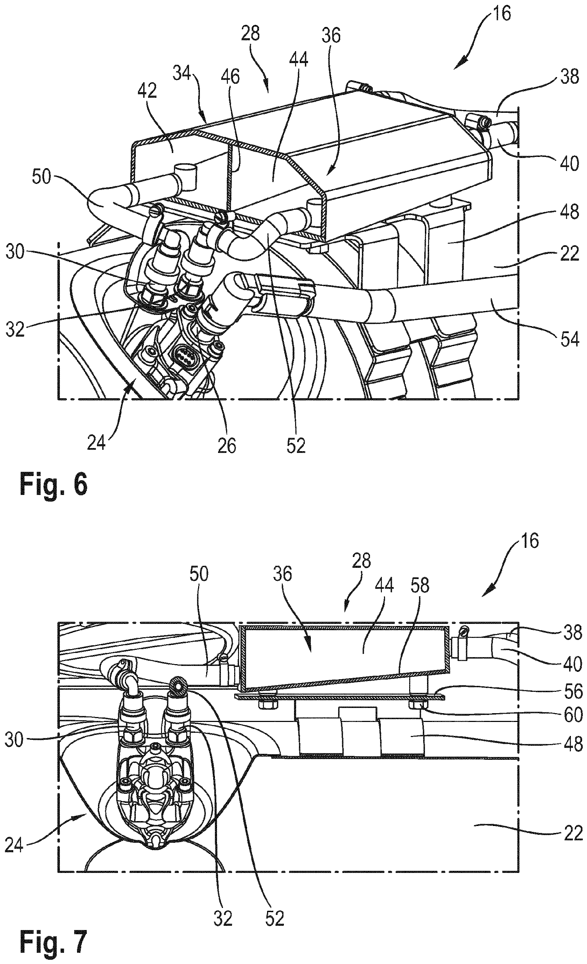

In einem weiteren Ausführungsbeispiel (Figur 5) ist der Wärmeenergiespeicher 28 beabstandet und oberhalb von dem Dosiermodul 24 angeordnet. Das Dosiermodul 24 ist dabei auf einem Trägermodul 48 oberhalb des Katalysators 22 angeordnet, und thermisch leitend, insbesondere fluiddurchlässig, mit dem Dosiermodul 24 verbunden. Die erste Kammer 34 des Wärmeenergiespeichers 28 ist über eine Zulaufleitung 50 mit dem Zulaufstutzen 30 des Dosiermoduls 24 verbunden. Der Rücklaufstutzen 32 des Dosiermoduls 24 ist über eine Rücklaufleitung 52 mit der zweiten Kammer 36 des Wärmeenergiespeichers 28 verbunden. Die Einspritzdüse 26 des Dosiermoduls 24 ist über eine Hilfsstoffleitung 54 mit einem nicht dargestellten Reservoir des Hilfsstoffes verbunden. Bei einer Unterbrechung der aktiven Kühlung des Dosiermoduls 24 erfolgt eine Leitung der Wärmeenergie von dem Dosiermodul 24 (Figur 6) über den Zulaufstutzen 30 und den Rücklaufstutzen 32 über die Zulaufleitung 50 und die Rücklaufleitung 52 zu der ersten und der zweiten Kammer des Wärmeenergiespeichers 28, so dass die Wärmeenergie des Dosiermoduls 24 durch das erste Speichermedium 42 und das zweite Speichermedium 44 aufgenommen und gespeichert werden können. Die beabstandete Anordnung des Wärmeenergiespeichers 28 zu dem Dosiermodul 24 und der Einspritzdüse 26 bietet den Vorteil, dass der Wärmeenergiespeicher an einem Bauraum technisch günstigeren Ort innerhalb des Motorraumes angeordnet werden kann.

In Figur 7 ist der Wärmeenergiespeicher 28 in einer geschnittenen Seitenansicht dargestellt, wobei zwischen dem Wärmeenergiespeicher 28 und dem Trägermodul 48 eine plattenförmige Wärmeschutzvorrichtung 56 angeordnet ist, welche in Form eines Hitzeschildes ausgebildet ist und den Wärmeenergiespeicher 28 vor der von dem Katalysator 22 abgegebenen Strahlungswärme schützt. Dadurch kann eine Aufnahme von Wärmeenergie von dem Katalysator 22 vermieden werden, so dass eine höhere Menge an Wärmeenergie von dem Dosiermodul 24 aufgenommen werden kann. Der geschnitten dargestellte Wärmeenergiespeicher 28 weist eine im Wesentlichen trapezförmige bzw. einen im Wesentlichen trapezförmigen Querschnitt auf, wobei der dem Katalysator 22 zugewandte Boden 58 derart geneigt ausgebildet ist bzw. zur Ausbildung eines Gefälles geneigt ausgebildet ist. Das Gefälle ist dabei von dem Zulauf 38 und dem Rücklauf (nicht dargestellt) zu dem Dosiermodul 24 hin ausgebildet, so dass selbst bei einer Beschädigung des Zulaufs 38 und/oder des Rücklaufes (nicht dargestellt) eine hinreichend große Menge an Speichermedium, insbesondere Kühlwasser, in dem Wärmeenergiespeicher 28 zur Aufnahme von Wärmeenergie des Dosiermoduls 24 zur Verfügung steht. Die Wärme-schutzvorrichtung 56 ist einstückig mit dem Trägermodul 48 ausgebildet. Der Wärmeenergiespeicher 28 ist dabei mit Befestigungsmitteln 60 mit dem Trägermodul 48, und insbesondere der Wärmeschutzvorrichtung 56 lösbar verbunden

### Bezugszeichenliste

- 10: Fahrzeug
- 12: Verbrennungsmotor
- 14: Abgasrohr
- 16: Vorrichtung zur Abgasnachbehandlung
- 18: Fahrerkabine
- 20: Auspuff
- 22: Katalysator
- 24: Dosiermodul
- 26: Einspritzdüse
- 28: Wärmeenergiespeicher
- 30: Zulaufstutzen
- 32: Rücklaufstutzen
- 34: Erste Kammer
- 36: Zweite Kammer
- 38: Zulauf
- 40: Rücklauf
- 42: Erstes Speichermedium
- 44: Zweites Speichermedium
- 46: Trennwand
- 48: Trägermodul
- 50: Zulaufleitung
- 52: Rücklaufleitung
- 54: Hilfsstoffleitung
- 56: Wärmeschutzvorrichtung
- 58: Boden
- 60: Befestigungselement

## Patentansprüche

1. Vorrichtung (16) zur Abgasnachbehandlung für ein Fahrzeug (10), insbesondere eine landwirtschaftliche Arbeitsmaschine, mit einem Verbrennungsmotor (12), mit einem Dosiermodul (24) mit einer Einspritzdüse (26) zum Einbringen eines Hilfsstoffes, insbesondere eines Reduktionsmittels wie Harnstoff, in einen Abgasstrom des Verbrennungsmotors (12), einem Wärmeenergiespeicher (28) zur Speicherung von Wärmeenergie des Dosiermodules (24), welcher thermisch leitend mit dem Dosiermodul (24), und insbesondere der Einspritzdüse (26), verbunden ist, **dadurch gekennzeichnet, dass** der Wärmeenergiespeicher (28) zur Aufnahme von flüssigen Speichermedien (42, 44) in Form eines Tankes ausgebildet ist, welcher eine erste Kammer (34) und eine zweite Kammer (36) jeweils zur Aufnahme eines flüssigen Speichermediums (42, 44) aufweist, wobei die flüssigen Speichermedien (42, 44) Kühlwasser des Verbrennungsmotors (12) sind, und das Kühlwasser aus der ersten Kammer (34) über einen Zulaufstutzen (30) zur Kühlung des Dosiermoduls (24) durch dieses hindurch geleitet wird und das Dosiermodul (24) über einen Rücklaufstutzen (32) verlässt und in die zweite Kammer (36) des Wärmeenergiespeichers (28) gelangt.

2. Vorrichtung nach Anspruch 1, **dadurch gekennzeichnet, dass** der Wärmeenergiespeicher (28) beabstandet zu oder unmittelbar an dem Dosiermodul (24) und/oder der Einspritzdüse (26) angeordnet ist.

3. Vorrichtung nach Anspruch 1 oder 2, **dadurch gekennzeichnet, dass** der Wärmeenergiespeicher (28) mindestens ein Speichermedium (42, 44) in Form einer Flüssigkeit oder eines Feststoffes zur Aufnahme der Wärmeenergie des Dosiermoduls (24) aufweist.

4. Vorrichtung nach einem der vorherigen Ansprüche, **dadurch gekennzeichnet, dass** mindestens ein erstes und ein zweites Speichermedium (42, 44) vorgesehen sind, wobei die Speichermedien (42, 44) fest und/oder flüssig sein können und gleiche oder unterschiedliche spezifische Wärmekapazitäten aufweisen können.

5. Vorrichtung nach einem der vorherigen Ansprüche, **dadurch gekennzeichnet, dass** der Wärmeenergiespeicher (28) zur Aufnahme eines flüssigen Speichermediums (42, 44) in Form einer Rohrleitung ausgebildet ist.

6. Vorrichtung nach einem der vorherigen Ansprüche, **dadurch gekennzeichnet, dass** der Wärmeenergiespeicher und/oder das Dosiermodul, und insbesondere die Einspritzdüse, wassergekühlt ist.

7. Vorrichtung nach einem der vorherigen Ansprüche, **dadurch gekennzeichnet, dass** der Wärmeenergiespeicher (28) Kühlstrukturen zur Abgabe aufgenommener Wärmeenergie aufweist.

8. Vorrichtung nach einem der vorherigen Ansprüche, **dadurch gekennzeichnet, dass** der Wärmeenergiespeicher (28) mindestens eine Wärmeschutzvorrichtung (56) aufweist, welche eine Aufnahme von anderer Wärmeenergie als der des Dosiermoduls (24) verringert.

9. Fahrzeug, insbesondere landwirtschaftliche Arbeitsmaschine, mit mindestens einer Vorrichtung (16) zur Abgasnachbehandlung nach einem der vorherigen Ansprüche.

## Claims

1. Apparatus (16) for exhaust gas aftertreatment for a vehicle (10), in particular an agricultural working machine, having an internal combustion engine (12), having a metering module (24) with an injection nozzle (26) for the introduction of an additive, in particular a reducing agent like urea, into an exhaust gas flow from the internal combustion engine (12), a heat energy storage means (28) for the storage of heat energy of the metering module (24), which is thermally conductingly connected to the metering module (24) and in particular the injection nozzle (26), **characterised in that** the heat energy storage means (28) is designed for receiving liquid storage media (42, 44) in the form of a tank which has a first chamber (34) and a second chamber (36) for respectively receiving a liquid storage medium (42, 44), wherein the liquid storage media (42, 44) are cooling water of the internal combustion engine (12) and the cooling water is passed out of the first chamber (34) by way of a feed connection (30) through the metering module (24) for cooling same and leaves the metering module (24) by of a return connection (32) and passes into the second chamber (36) of the heat energy storage means (28).

2. Apparatus according to claim 1 **characterised in that** the heat energy storage means (28) is arranged in spaced relationship with or directly at the metering module (24) and/or the injection nozzle (26).

3. Apparatus according to claim 1 or claim 2 **characterised in that** the heat energy storage means (28) has at least one storage medium (42, 44) in the form of a liquid or a solid for receiving the heat energy of the metering module (24).

4. Apparatus according to one of the preceding claims **characterised in that** there are provided at least a first and a second storage medium (42, 44), wherein the storage media (42, 44) can be solid and/or liquid and can have the same or different specific heat capacities.

5. Apparatus according to one of the preceding claims **characterised in that** the heat energy storage means (28) for receiving a liquid storage medium (42, 44) is in the form of a pipe.

6. Apparatus according to one of the preceding claims **characterised in that** the heat energy storage means and/or the metering module and in particular the injection nozzle is water-cooled.

7. Apparatus according to one of the preceding claims **characterised in that** the heat energy storage means (28) has cooling structures for the discharge of received heat energy.

8. Apparatus according to one of the preceding claims **characterised in that** the heat energy storage means (28) has at least one heat protection device (56) which reduces absorption of heat energy other than that of the metering module (24).

9. A vehicle, in particular an agricultural working machine, comprising at least one apparatus (16) for exhaust gas aftertreatment according to one of the preceding claims.

## Revendications

1. Dispositif (16) de post-traitement des gaz d'échappement pour un véhicule (10), en particulier une machine de travail agricole, comprenant un moteur à combustion interne (12), comprenant un module de dosage (24) avec un injecteur (26) pour introduire un agent auxiliaire, en particulier un moyen réducteur comme de l'urée, dans le courant de gaz d'échappement du moteur à combustion interne (12), comprenant un accumulateur d'énergie thermique (28) qui est destiné à accumuler de l'énergie thermique du module de dosage (24) et est relié de manière thermoconductrice au module de dosage (24) et, en particulier, à l'injecteur (26), **caractérisé en ce que** l'accumulateur d'énergie thermique (28) est conçu, dans le but de recevoir des agents d'accumulation liquides (42, 44), sous la forme d'un réservoir qui comporte une première chambre (34) et une seconde chambre (36) pour recevoir chacune un agent d'accumulation liquide (42, 44), les agents d'accumulation liquides (42, 44) étant de l'eau de refroidissement du moteur à combustion interne (12), et l'eau de refroidissement étant conduite à partir de la première chambre (34) par l'intermédiaire d'une tubulure d'amenée (30) pour refroidir le module de dosage (24) en le traversant, et quittant le module de dosage (24) par l'intermédiaire d'une tubulure de retour (32) et pénétrant dans la seconde chambre (36) de l'accumulateur d'énergie thermique (28).

2. Dispositif selon la revendication 1, **caractérisé en ce que** l'accumulateur d'énergie thermique (28) est disposé à distance de ou directement sur le module de dosage (24) et/ou sur l'injecteur (26).

3. Dispositif selon la revendication 1 ou 2, **caractérisé en ce que** l'accumulateur d'énergie thermique (28) comporte au moins un agent d'accumulation (42, 44) en forme d'un liquide ou d'un solide pour absorber l'énergie thermique du module de dosage (24).

4. Dispositif selon une des revendications précédentes, **caractérisé en ce qu'**au moins un premier et un second agent d'accumulation (42, 44) sont prévus, les agents d'accumulation (42, 44) pouvant être solides et/ou liquides et pouvant présenter des capacités thermiques spécifiques identiques ou différentes.

5. Dispositif selon une des revendications précédentes, **caractérisé en ce que** l'accumulateur d'énergie thermique (28) pour recevoir un agent d'accumulation liquide (42, 44) est conçu en forme de conduite tubulaire.

6. Dispositif selon une des revendications précédentes, **caractérisé en ce que** l'accumulateur d'énergie thermique et/ou le module de dosage, et en particulier l'injecteur, est refroidi par eau.

7. Dispositif selon une des revendications précédentes, **caractérisé en ce que** l'accumulateur d'énergie thermique (28) comporte des structures de refroidissement pour céder de l'énergie thermique absorbée.

8. Dispositif selon une des revendications précédentes, **caractérisé en ce que** l'accumulateur d'énergie thermique (28) comporte au moins un dispositif d'isolation thermique (56) qui réduit une absorption d'énergie thermique autre que celle du module de dosage (24).

9. Véhicule, en particulier machine de travail agricole, comprenant au moins un dispositif (16) de post-traitement des gaz d'échappement selon une des revendications précédentes.
